# EUROPÄISCHE PATENTSCHRIFT

(11) **EP 3 849 796 B1**
(45) Veröffentlichungstag und Bekanntmachung des Hinweises auf die Patenterteilung: **03.08.2022**
(21) Anmeldenummer: 19763025.4
(22) Anmeldetag: 11.09.2019
(51) Int. Cl.: B32B 15/088, B32B 15/18, B32B 27/34, B32B 5/02, B32B 15/20, B32B 27/20

(54) **LAMINAT ENTHALTEND EIN METALL UND EINE POLYMERSCHICHT AUS EINEM POLYAMID UND EINEM ACRYLAT**
LAMINATE COMPRISING A METAL AND A POLYMER LAYER MADE FROM A POLYAMIDE AND AN ACRYLATE
STRATIFIÉ CONTENANT UN MÉTAL ET UNE COUCHE POLYMÈRE D'UN POLYAMIDE ET D'UN ACRYLATE

(30) Priorität: 14.09.2018 EP 18194558
(43) Veröffentlichungstag der Anmeldung: 21.07.2021
(73) Patentinhaber: BASF SE, 67056 Ludwigshafen am Rhein (DE); ThyssenKrupp Steel Europe AG, 47166 Duisburg (DE)
(72) Erfinder: SPIES, Patrick, 67056 Ludwigshafen (DE); DESBOIS, Philippe, 67056 Ludwigshafen (DE); SIMON, Jasmina, 67056 Ludwigshafen (DE)
(74) Vertreter: Baier, Martin
(86) Internationale Anmeldenummer: PCT/EP2019/074257
(87) Internationale Veröffentlichungsnummer: WO 2020/053293

(56) Entgegenhaltungen:
- EP-A1- 2 085 215
- WO-A1-2005/014278
- US-A1- 2011 200 816

## Beschreibung

Die vorliegende Erfindung betrifft ein Laminat, umfassend mindestens eine erste Schicht mindestens eines ersten Metalls und mindestens eine weitere Schicht einer Polymerzusammensetzung (PZ) sowie ein Verfahren zur Herstellung des erfindungsgemäßen Laminats.

Eine in der heutigen Zeit häufig gestellte Aufgabe ist die Bereitstellung neuer Materialien, insbesondere für den Flugzeugbau, den Automobilbau und den Bootsbau, die leichter sind als die bislang eingesetzten Materialien. Gleichzeitig sollen diese neuen Materialien dieselben mechanischen Eigenschaften, insbesondere Festigkeit, Steifigkeit und Stabilität wie die bekannten Materialien aufweisen, oder diesen sogar überlegen sein. Die neuen Materialien sollen darüber hinaus mit bekannten Verfahren umgeformt werden können, wie beispielsweise mittels tiefziehen, walzen, biegen, prägen oder falzen.

Die WO 2005/014278 beschreibt Laminate, die zwischen zwei äußeren Metallschichten eine klebende Polymerschicht enthalten. Diese Polymerschicht enthält ein Polyamid 6, Polyamid 6.6, Polyamid 11, Polyamid 12, Polyamid 4.6, Polyamid 6.10 oder Polyamid 6.12 und ein Copolymer aus Ethylen und einer ungesättigten Carbonsäure und/oder einem Carbonsäurederivat und einem reaktiven Copolymer. Das Copolymer aus Ethylen und einer ungesättigten Carbonsäure und/oder einem Carbonsäurederivat kann mit polaren Gruppen gegraftet werden.

Nachteilig bei den in der WO 2005/014278 beschriebenen Laminaten ist, dass sie insbesondere nach Lagerung in feuchter Umgebung nur noch eine schlechte Zugfestigkeit aufweisen. Darüber hinaus weist die Polymerschicht häufig eine schwankende Feuchtigkeitsaufnahme und daraus resultierend schwankende Haftungseigenschaften auf.

Die US 2011/0200816 beschreibt Laminate, die zwei Metallschichten und eine dazwischenliegende Polymerschicht umfassen. Die Polymerschicht enthält beispielsweise ein Polyamid 6/66 Copolymer. Darüber hinaus sind verschiedene weitere thermoplastische Polymere wie Polyolefine und Polyimide beschrieben. Auch die in US 2011/0200816 beschriebenen Laminate weisen insbesondere nach Lagerung in feuchter Umgebung nur schlechte Zugfestigkeiten auf, oder werden durch Luftfeuchtigkeit sogar bis zur Unbenutzbarkeit zerstört.

Die DE 10 2011 084519 beschreibt Siegelschichten für Solarzellen, die eine erste Außenschicht, eine Mittelschicht und eine zweite Außenschicht umfassen. Die Schichten können Polyamide, wie beispielsweise Polyamid 6 oder Polyamid 66 enthalten.

Die der vorliegenden Erfindung zugrundeliegende Aufgabe bestand somit darin, ein Laminat sowie ein Verfahren zu dessen Herstellung bereitzustellen, welches die Nachteile der im Stand der Technik beschriebenen Laminate nicht oder nur in vermindertem Maße aufweist.

Gelöst wurde diese Aufgabe durch ein Laminat umfassend mindestens eine erste Schicht mindestens eines ersten Metalls und mindestens eine weitere Schicht einer Polymerzusammensetzung (PZ), dadurch gekennzeichnet, dass die Polymerzusammensetzung (PZ) die Komponenten
(A) mindestens ein Polyamid,
(B) mindestens ein erstes Copolymer erhältlich durch Polymerisation mindestens der Komponenten
   (B1) mindestens ein erstes C₂-C₂₀-Alken und
   (B2) mindestens ein zweites C₂-C₂₀-Alken,
   wobei die Komponenten (B1) und (B2) verschieden voneinander sind,
(C) mindestens ein zweites Copolymer erhältlich durch Polymerisation mindestens der Komponenten
   (C1) mindestens ein drittes C₂-C₂₀-Alken und
   (C2) mindestens ein Acrylsäurederivat
enthält.

Es wurde überraschend gefunden, dass die erfindungsgemäßen Laminate ein besonders gutes Peelverhalten aufweisen.

Nachfolgend wird die vorliegende Erfindung näher erläutert.

### Laminat

Erfindungsgemäß umfasst das Laminat mindestens eine erste Schicht mindestens eines ersten Metalls und mindestens eine weitere Schicht einer Polymerzusammensetzung (PZ).

"Mindestens eine erste Schicht" bedeutet im Rahmen der vorliegenden Erfindung sowohl genau eine erste Schicht als auch zwei oder mehrere erste Schichten.

"Mindestens ein erstes Metall" bedeutet im Rahmen der vorliegenden Erfindung sowohl genau ein erstes Metall als auch eine Mischung aus zwei oder mehreren ersten Metallen.

"Mindestens eine weitere Schicht" bedeutet im Rahmen der vorliegenden Erfindung sowohl genau eine weitere Schicht als auch zwei oder mehrere weitere Schichten.

Bevorzugt umfasst das Laminat zusätzlich mindestens eine zweite Schicht mindestens eines zweiten Metalls, wobei die mindestens eine erste Schicht mindestens eines ersten Metalls mit der mindestens einen zweiten Schicht mindestens eines zweiten Metalls über die mindestens eine weitere Schicht der Polymerzusammensetzung (PZ) verbunden ist. In einem solchen Laminat folgt also auf die mindestens eine erste Schicht mindestens eine weitere Schicht und auf diese wiederum mindestens eine zweite Schicht.

Ein solches Laminat, das mindestens eine erste Schicht, mindestens eine weitere Schicht und mindestens eine zweite Schicht umfasst, wird auch als Sandwichmaterial bezeichnet.

Gegenstand der vorliegenden Erfindung ist daher auch ein Laminat, bei dem das Laminat zusätzlich mindestens eine zweite Schicht mindestens eines zweiten Metalls umfasst und bei dem die mindestens eine erste Schicht mit der mindestens einen zweiten Schicht über die mindestens eine weitere Schicht verbunden ist.

Das mindestens eine erste Metall der mindestens einen ersten Schicht kann gleich oder verschieden von dem mindestens einen zweiten Metall der mindestens einen zweiten Schicht sein. Bevorzugt ist das mindestens eine erste Metall der mindestens einen ersten Schicht gleich dem mindestens einen zweiten Metall der mindestens einen zweiten Schicht.

Das Laminat umfasst mindestens eine erste Schicht mindestens eines ersten Metalls. Anders ausgedrückt umfasst das Laminat mindestens eine erste Schicht, die aus mindestens einem ersten Metall besteht.

Die mindestens eine erste Schicht mindestens eines ersten Metalls weist beispielsweise eine Dicke im Bereich von 0,1 bis 0,6 mm, bevorzugt im Bereich von 0,15 bis 0,4 mm und insbesondere bevorzugt im Bereich von 0,18 bis 0,3 mm auf.

Gegenstand der vorliegenden Erfindung ist daher auch ein Laminat, bei dem die mindestens eine erste Schicht eine Dicke im Bereich von 0,1 bis 0,6 mm aufweist.

Bevorzugt umfasst das Laminat zusätzlich mindestens eine zweite Schicht mindestens eines zweiten Metalls. Anders ausgedrückt umfasst das Laminat bevorzugt zusätzlich mindestens eine zweite Schicht, die aus mindestens einem zweiten Metall besteht.

Die mindestens eine zweite Schicht mindestens eines zweiten Metalls weist beispielsweise eine Dicke im Bereich von 0,1 bis 0,6 mm, bevorzugt im Bereich von 0,15 bis 0,4 mm und insbesondere bevorzugt im Bereich von 0,18 bis 0,3 mm auf.

Gegenstand der vorliegenden Erfindung ist daher auch ein Laminat, bei dem das Laminat zusätzlich mindestens eine zweite Schicht mindestens eines zweiten Metalls umfasst, wobei die mindestens eine zweite Schicht eine Dicke im Bereich von 0,1 bis 0,6 mm aufweist.

Die Dicke der mindestens einen zweiten Schicht kann gleich oder verschieden von der Dicke der mindestens einen ersten Schicht sein. Bevorzugt ist die Dicke der mindestens einen zweiten Schicht gleich der Dicke der mindestens einen ersten Schicht.

Als das mindestens eine erste Metall der mindestens einen ersten Schicht eignen sich alle dem Fachmann bekannten Metalle und Metalllegierungen, die bei den Herstellungstemperaturen und den Gebrauchstemperaturen des Laminats fest sind. Bevorzugt ist das mindestens eine erste Metall der mindestens einen ersten Schicht ausgewählt aus der Gruppe bestehend aus Eisen, Aluminium, Kupfer, Nickel und Magnesium sowie Legierungen daraus. Besonders bevorzugt ist das mindestens eine erste Metall eine Legierung aus Eisen, insbesondere bevorzugt ist das mindestens eine erste Metall Stahl.

Gegenstand der vorliegenden Erfindung ist daher auch ein Laminat, bei dem das mindestens eine erste Metall der mindestens einen ersten Schicht ausgewählt ist aus der Gruppe bestehend aus Eisen, Aluminium, Kupfer, Nickel und Magnesium sowie Legierungen daraus.

Gegenstand der vorliegenden Erfindung ist daher auch ein Laminat, bei dem das mindestens eine erste Metall ausgewählt ist aus der Gruppe bestehend aus Eisen, Aluminium, Kupfer, Nickel und Magnesium sowie Legierungen daraus.

Stahl ist dem Fachmann bekannt. Unter "Stahl" werden im Rahmen der vorliegenden Erfindung Legierungen, die als Hauptbestandteil Eisen enthalten, verstanden. Dies entspricht der Definition von Stahl gemäß DIN EN 10020:2000-07.

Das mindestens eine erste Metall kann beschichtet oder unbeschichtet sein. Bevorzugt ist das mindestens eine erste Metall beschichtet. Geeignete Beschichtungen für das mindestens eine erste Metall sind dem Fachmann als solche bekannt und beispielsweise Haftvermittlerschichten, Korrosionsschutzschichten, Farbe, Zink- oder Magnesiumbeschichtungen.

Bevorzugt ist das mindestens eine erste Metall verzinkt. "Verzinkt" bedeutet, dass das mindestens eine erste Metall mit einem weiteren Metall, insbesondere mit Zink oder Legierungen von Zink, beschichtet ist.

Besonders bevorzugt ist das mindestens eine erste Metall daher verzinkter Stahl.

Das Verzinken des mindestens einen ersten Metalls kann nach dem Fachmann bekannten Methoden erfolgen, beispielsweise durch Feuerverzinkung oder durch galvanisches Verzinken.

Ist das mindestens eine erste Metall verzinkt, so kann es darüber hinaus noch weitere Beschichtungen, wie beispielsweise Haftvermittlerschichten und/oder Farbe, aufweisen. Dies ist dem Fachmann bekannt.

Das Beschichten des mindestens einen ersten Metalls kann nach allen dem Fachmann bekannten Methoden erfolgen, beispielsweise kann die Beschichtung aus einer wässrigen Lösung oder einer Dispersion erfolgen.

Für das mindestens eine zweite Metall der mindestens einen zweiten Schicht gelten die zuvor beschriebenen Ausführungen und Bevorzugungen für das mindestens eine erste Metall der mindestens einen ersten Schicht entsprechend.

Gegenstand der vorliegenden Erfindung ist daher auch ein Laminat, bei dem das Laminat zusätzlich mindestens eine zweite Schicht mindestens eines zweiten Metalls umfasst, wobei das mindestens eine zweite Metall der mindestens einen zweiten Schicht ausgewählt ist aus der Gruppe bestehend aus Eisen, Aluminium, Kupfer, Nickel und Magnesium sowie Legierungen daraus.

Das Laminat umfasst mindestens eine weitere Schicht einer Polymerzusammensetzung (PZ). Anders ausgedrückt bedeutet dies, dass die mindestens eine weitere Schicht aus der Polymerzusammensetzung (PZ) besteht.

Die mindestens eine weitere Schicht einer Polymerzusammensetzung (PZ) weist beispielsweise eine Dicke im Bereich von 0,02 bis 2 mm, bevorzugt im Bereich von 0,05 bis 1,5 mm und insbesondere bevorzugt im Bereich von 0,1 bis 1 mm auf.

Gegenstand der vorliegenden Erfindung ist daher auch ein Laminat, bei dem die mindestens eine weitere Schicht eine Dicke im Bereich von 0,02 bis 2 mm aufweist.

Gegenstand der vorliegenden Erfindung ist daher auch ein Laminat, bei dem die mindestens eine erste Schicht eine Dicke im Bereich von 0,1 mm bis 0,6 mm aufweist und/oder bei dem die mindestens eine weitere Schicht eine Dicke im Bereich von 0,02 bis 2 mm aufweist.

### Polymerzusammensetzung (PZ)

Erfindungsgemäß enthält die Polymerzusammensetzung (PZ) die Komponenten (A) mindestens ein Polyamid, (B) mindestens ein erstes Copolymer und (C) mindestens ein zweites Copolymer.

"Mindestens ein Polyamid" bedeutet im Rahmen der vorliegenden Erfindung sowohl genau ein Polyamid als auch eine Mischung (Blend) aus zwei oder mehreren Polyamiden.

"Mindestens ein erstes Copolymer" bedeutet im Rahmen der vorliegenden Erfindung sowohl genau ein erstes Copolymer als auch eine Mischung aus zwei oder mehreren ersten Copolymeren.

"Mindestens ein zweites Copolymer" bedeutet im Rahmen der vorliegenden Erfindung sowohl genau ein zweites Copolymer als auch eine Mischung (Blend) aus zwei oder mehreren zweiten Copolymeren.

Im Rahmen der vorliegenden Erfindung werden die Begriffe "Komponente (A)" und "mindestens ein Polyamid" synonym gebraucht und besitzen daher die gleiche Bedeutung.

Ebenso werden im Rahmen der vorliegenden Erfindung die Begriffe "Komponente (B)" und "mindestens ein erstes Copolymer" sowie die Begriffe "Komponente (C)" und "mindestens ein zweites Copolymer" synonym gebraucht und besitzen daher ebenfalls jeweils die gleiche Bedeutung.

Dem Fachmann ist klar, dass sich das mindestens eine erste Copolymer der Polymerzusammensetzung (PZ) von dem mindestens einen zweiten Copolymer der Polymerzusammensetzung (PZ) unterscheidet. Die Komponente (B) ist also von der Komponente (C) verschieden.

Gegenstand der vorliegenden Erfindung ist daher auch ein Laminat, bei dem die in der Polymerzusammensetzung (PZ) enthaltene Komponente (B) von der in der Polymerzusammensetzung (PZ) enthaltenen Komponente (C) verschieden ist.

Die Polymerzusammensetzung (PZ) kann nach allen dem Fachmann bekannten Methoden hergestellt werden. Beispielsweise werden die in der Polymerzusammensetzung (PZ) enthaltenen Komponenten (A), (B) und (C) in einem Extruder compoundiert und so die Polymerzusammensetzung (PZ) erhalten.

Dem Fachmann ist klar, dass die Komponenten (A), (B) und (C) in der Polymerzusammensetzung (PZ) als Mischung (Blend) vorliegen können. Bei der Herstellung der Polymerzusammensetzung (PZ) können die in der Polymerzusammensetzung (PZ) enthaltenen Komponenten (A), (B) und (C) außerdem zumindest teilweise miteinander reagieren. Dies ist dem Fachmann bekannt.

Darüber hinaus kann die Polymerzusammensetzung (PZ) zusätzlich mindestens einen Füllstoff enthalten.

"Mindestens ein Füllstoff" bedeutet im Rahmen der vorliegenden Erfindung sowohl genau ein Füllstoff als auch eine Mischung aus zwei oder mehreren Füllstoffen.

Als Füllstoff eignen sich alle dem Fachmann bekannten Füllstoffe, die mit den Komponenten (A), (B) und (C) der Polymerzusammensetzung (PZ) gemischt werden können.

Bevorzugt ist der mindestens eine Füllstoff ausgewählt aus der Gruppe bestehend aus anorganischen Füllstoffen, organischen Füllstoffen und Naturfüllstoffen.

Der mindestens eine Füllstoff ist üblicherweise partikelförmig. Beispielsweise kann der mindestens eine Füllstoff ein Fasermaterial sein oder beispielsweise in Form von Kugeln vorliegen. Der mindestens eine Füllstoff weist beispielsweise ein Aspektverhältnis im Bereich von 1 bis 15, bevorzugt im Bereich von 1 bis 10 und insbesondere bevorzugt im Bereich von 1 bis 5 auf. Unter dem "Aspektverhältnis" wird im Rahmen der vorliegenden Erfindung das Verhältnis der größten Dimension eines Partikels des mindestens einen Füllstoffs zur kleinsten Dimension eines Partikels des mindestens einen Füllstoffs verstanden.

Unter "Fasermaterialien" werden im Rahmen der vorliegenden Erfindung sämtliche Materialien verstanden, die Fasern aufweisen, wie beispielsweise einzelne Fasern, Faserbündel (Rovings), Vliese, Gelege, Gewebe oder Gestricke.

Beispielsweise ist der mindestens eine Füllstoff daher ausgewählt aus der Gruppe bestehend aus Wollastonit, Talkum, Borfasermaterialien, Glasfasermaterialien, Kohlenstofffasermaterialien, Kieselsäurefasermaterialien, Keramikfasermaterialien, Basaltfasermaterialien, Metallfasermaterialien, Aramidfasermaterialien, Poly-(p-Phenylen-2,6-Benzobisoxazol)-Fasermaterialien, Polyesterfasermaterialien, Nylonfasermaterialien, Polyethylenfasermaterialien, Holzfasermaterialien, Flachsfasermaterialien, Hanffasermaterialien, Kokosfasermaterialien und Sisalfasermaterialien.

Besonders bevorzugt ist der mindestens eine Füllstoff ausgewählt aus der Gruppe bestehend aus Glasfasermaterialien, Kohlenstofffasermaterialien, Aramidfasermaterialen, Poly-(p-Phenylen-2,6-Benzobisoxazol)-Fasermaterialen, Borfasermaterialien, Metallfasermaterialien und Kaliumtitanatfasermaterialien. Insbesondere bevorzugt ist der mindestens eine Füllstoff ein Glasfasermaterial.

Bevorzugt enthält die Polymerzusammensetzung (PZ) keinen Füllstoff.

Beispielsweise enthält die Polymerzusammensetzung (PZ) im Bereich von 40 bis 99 Gew.-% der Komponente (A), bevorzugt im Bereich von 55 bis 85 Gew.-% und insbesondere bevorzugt im Bereich von 60 bis 80 Gew.-% der Komponente (A), jeweils bezogen auf die Summe der Gew.-% der Komponenten (A), (B) und (C) und gegebenenfalls des mindestens einen Füllstoffs, bevorzugt bezogen auf das Gesamtgewicht der Polymerzusammensetzung (PZ).

Gegenstand der vorliegenden Erfindung ist daher auch ein Laminat, bei dem die Polymerzusammensetzung (PZ) im Bereich von 40 bis 99 Gew.-% der Komponente (A) enthält, bezogen auf die Summe der Gewichtsprozente der Komponenten (A), (B) und (C).

Die Polymerzusammensetzung (PZ) enthält beispielsweise im Bereich von 0,5 bis 30 Gew.-% der Komponente (B), bevorzugt im Bereich von 5 bis 20 Gew.-% und insbesondere bevorzugt im Bereich von 10 bis 15 Gew.-% der Komponente (B), jeweils bezogen auf die Summe der Gew.-% der Komponenten (A), (B) und (C) und gegebenenfalls des mindestens einen Füllstoffs, bevorzugt bezogen auf das Gesamtgewicht der Polymerzusammensetzung (PZ).

Die Polymerzusammensetzung (PZ) enthält beispielsweise im Bereich von 0,5 bis 50 Gew.-% der Komponente (C), bevorzugt im Bereich von 5 bis 40 Gew.-% und insbesondere bevorzugt im Bereich von 10 bis 30 Gew.-% der Komponente (C), jeweils bezogen auf die Summe der Gew.-% der Komponenten (A), (B) und (C) und gegebenenfalls des mindestens einen Füllstoffs, bevorzugt bezogen auf das Gesamtgewicht der Polymerzusammensetzung (PZ).

Die Polymerzusammensetzung (PZ) enthält beispielsweise im Bereich von 0,1 bis 70 Gew.-% des mindestens einen Füllstoffs, bevorzugt im Bereich von 0,5 bis 60 Gew.-% und insbesondere bevorzugt im Bereich von 1 bis 50 Gew.-% des mindestens einen Füllstoffs, jeweils bezogen auf die Summe der Gew.-% der Komponenten (A), (B) und (C) und des mindestens einen Füllstoffs, bevorzugt bezogen auf das Gesamtgewicht der Polymerzusammensetzung (PZ).

Die Summe der Gew.-% der Komponenten (A), (B) und (C) und gegebenenfalls des mindestens einen Füllstoffs ergibt üblicherweise 100 Gew.-%.

Die Polymerzusammensetzung (PZ) kann darüber hinaus dem Fachmann bekannte Additive enthalten. Beispielsweise sind Additive, die in der Polymerzusammensetzung (PZ) enthalten sein können, ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln.

Gegenstand der vorliegenden Erfindung ist daher auch ein Laminat, bei dem die Polymerzusammensetzung (PZ) zusätzlich mindestens ein Additiv ausgewählt aus der Gruppe bestehend aus Stabilisatoren, Farbstoffen, Antistatika, Füllölen, Oberflächenverbesserern, Sikkativen, Entformungshilfsmitteln, Trennmitteln, Antioxidantien, Lichtstabilisatoren, PVC-Stabilisatoren, Gleitmitteln, Flammschutzmitteln, Treibmitteln, Schlagzähmodifikatoren, Haftvermittlern, Kopplungsmitteln und Nukleierungshilfsmitteln enthält.

Diese Additive sind dem Fachmann als solche bekannt. Kopplungsmittel werden auch als Vernetzungsmittel bezeichnet. Unter Haftvermittlern werden im Rahmen der vorliegenden Erfindung Additive verstanden, die die Haftung der Polymerzusammensetzung (PZ) der mindestens einen weiteren Schicht an die mindestens eine erste Schicht sowie gegebenenfalls an die mindestens eine zweite Schicht weiter verbessern.

### Komponente (A)

Erfindungsgemäß ist die in der Polymerzusammensetzung (PZ) enthaltene Komponente (A) mindestens ein Polyamid.

Polyamide sind dem Fachmann als solche bekannt.

Geeignete Polyamide weisen im Allgemeinen eine Viskositätszahl im Bereich von 70 bis 350 ml/g, vorzugsweise im Bereich von 70 bis 240 ml/g auf. Die Bestimmung der Viskositätszahl erfolgt erfindungsgemäß aus einer 0,5-gew.-%igen Lösung des Polyamids in 96-gew.-%iger Schwefelsäure bei 25 °C gemäß ISO 307.

Als Polyamide sind teilkristalline Polyamide bevorzugt. Geeignete Polyamide weisen ein gewichtsmittleres Molekulargewicht (M_{W}) im Bereich von 500 bis 2 000 000 g/mol, bevorzugt im Bereich von 5 000 bis 500 000 g/mol und besonders bevorzugt im Bereich von 10 000 bis 100 000 g/mol, auf. Das gewichtsmittlere Molekulargewicht (M_{W}) wird bestimmt gemäß ASTM D4001.

Als Polyamide sind beispielsweise Polyamide geeignet, die sich von Lactamen mit 7 bis 13 Ringgliedern ableiten. Als Polyamide sind weiterhin Polyamide geeignet, die durch Umsetzung von Dicarbonsäuren mit Diaminen erhalten werden.

Als Polyamide, die sich von Lactamen ableiten, seien beispielhaft Polyamide erwähnt, die sich von Polycaprolactam, Polycapryllactam und/oder Polylaurinlactam ableiten.

Weiterhin geeignete Polyamide sind erhältlich aus ω-Aminoalkylnitrilen. Bevorzugtes ω-Aminoalkylnitril ist Aminocapronitril, das zu Polyamid 6 führt. Weiterhin können Dinitrile mit Diamin umgesetzt werden. Hierbei sind Adipodinitril und Hexamethylendiamin bevorzugt, deren Polymerisation zu Polyamid 66 führt. Die Polymerisation von Nitrilen erfolgt in Gegenwart von Wasser und wird auch als Direktpolymerisation bezeichnet.

Für den Fall, dass Polyamide eingesetzt werden, die aus Dicarbonsäuren und Diaminen erhältlich sind, können Dicarbonsäurealkane (aliphatische Dicarbonsäuren) mit 6 bis 36 Kohlenstoffatomen, bevorzugt 6 bis 12 Kohlenstoffatomen, und besonders bevorzugt 6 bis 10 Kohlenstoffatomen eingesetzt werden. Darüber hinaus sind aromatische Dicarbonsäuren geeignet.

Beispielhaft seien hier Adipinsäure, Azelainsäure, Sebacinsäure, Dodecandisäure sowie Terephthalsäure und/oder Isophtalsäure als Dicarbonsäuren genannt.

Als Diamine eigenen sich beispielsweise Alkandiamine mit 4 bis 36 Kohlenstoffatomen, bevorzugt Alkandiamine mit 6 bis 12 Kohlenstoffatomen, insbesondere Alkandiamine mit 6 bis 8 Kohlenstoffatomen sowie aromatische Diamine, wie beispielsweise m-Xylylendiamin, Di-(4-aminophenyl)methan, Di-(4-aminocyclohexyl)-methan, 2,2-Di-(4-aminophenyl)-propan und 2,2-Di-(4-aminocyclohexyl)-propan sowie 1,5-Diamino-2-methyl-pentan.

Bevorzugte Polyamide sind Polyhexamethylenadipinsäureamid, Polyhexamethylensebacinsäureamid und Polycaprolactam sowie Copolyamid 6/66, insbesondere mit einem Anteil von 5 bis 95 Gew.-% an Caprolactam-Einheiten.

Weiterhin sind Polyamide geeignet, die durch Copolymerisation zweier oder mehrerer der vorstehend und nachstehend genannten Monomeren erhältlich sind, oder Mischungen mehrerer Polyamide, wobei das Mischungsverhältnis beliebig ist. Als Mischungen besonders bevorzugt sind Mischungen von Polyamid 66 mit anderen Polyamiden, insbesondere Copolyamid 6/66.

Geeignete Polyamide sind somit aliphatische, teilaromatische oder aromatische Polyamide. Der Begriff "aliphatische Polyamide" bedeutet, dass die Polyamide ausschließlich aus aliphatischen Monomeren aufgebaut sind. Der Begriff "teilaromatische Polyamide" bedeutet, dass die Polyamide sowohl aus aliphatischen als auch aus aromatischen Monomeren aufgebaut sind. Der Begriff "aromatische Polyamide" bedeutet, dass die Polyamide ausschließlich aus aromatischen Monomeren aufgebaut sind.

Die nachfolgende nicht abschließende Aufstellung enthält die vorstehend genannten sowie weitere Polyamide, die für den Einsatz im erfindungsgemäßen Laminat geeignet sind, sowie die enthaltenen Monomere.

### AB-Polymere:

- PA 4: Pyrrolidon
- PA 6: ω-Caprolactam
- PA 7: Enantholactam
- PA 8: Capryllactam
- PA 9: 9-Aminopelargonsäure
- PA 11: 11-Aminoundecansäure
- PA 12: Laurinlactam

### AA/BB-Polymere:

- PA 46: Tetramethylendiamin, Adipinsäure
- PA 66: Hexamethylendiamin, Adipinsäure
- PA 69: Hexamethlyendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: Nonyldiamin, Terephthalsäure
- PA MXD6: m-Xylyendiamin, Adipinsäure

- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Laurinlactam
- PA 6I/6T/PACM: wie PA 6I/6T und Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Gegenstand der vorliegenden Erfindung ist somit auch ein Laminat, bei dem die in der Polymerzusammensetzung (PZ) enthaltene Komponente (A) ausgewählt ist aus der Gruppe bestehend aus PA 4, PA 6, PA 7, PA 8, PA 9, PA 11, PA 12, PA 46, PA 66, PA 69, PA 510, PA 610, PA 612, PA 613, PA 1212, PA1313, PA 6T, PA MXD6, PA 6I, PA 6-3-T, PA 6/6T, PA 6/66, PA 66/6, PA 6/12, PA 66/6/610, PA 6I/6T, PA PACM 12, PA 6I/6T/PACM, PA 12/MACMI, PA 12/MACMT, PA PDA-T und Copolyamiden aus zwei oder mehreren der vorstehend genannten Polyamide.

Bevorzugt ist die Komponente (A) ausgewählt aus der Gruppe bestehend aus Polyamid 6 (PA 6), Polyamid 6.6 (PA 6.6), Polyamid 6.10 (PA 6.10), Polyamid 6.12 (PA 6.12), Polyamid 12 (PA12), Polyamid 6.36 (PA 6.36), Polyamid 6/6.6 (PA 6/6.6), Polyamid 6/6I6T (PA 6/6I6T), Polyamid 6/6I (PA 6/6I), Polyamid 6/6.36 (PA 6/6.36) und Polyamid 6/6T (PA 6/6T).

Besonders bevorzugt als Komponente (A) sind Polyamid 6 (PA 6), Polyamid 6/6.36 (PA 6/6.36) und/oder Polyamid 66 (PA 66), wobei Polyamid 6 (PA 6) und Polyamid 6/6.36 (PA 6/6.36) insbesondere bevorzugt ist. Am meisten bevorzugt ist Polyamid 6 (PA 6).

Gegenstand der vorliegenden Erfindung ist daher auch ein Laminat, bei dem die Komponente (A) ausgewählt ist aus der Gruppe bestehend aus PA 6, PA 6.6, PA 6.10, PA 6.12, PA 12, PA 6.36, PA 6/6.6, PA 6/6I6T, PA 6/6I, PA 6/6.36 und PA 6/6T.

Die Komponente (A) weist darüber hinaus üblicherweise eine Schmelztemperatur (T_{M(A)}) auf. Die Schmelztemperatur (T_{M(A)}) der Komponente (A) liegt beispielsweise im Bereich von 170 bis 320 °C, bevorzugt im Bereich von 180 bis 240 °C und insbesondere bevorzugt im Bereich von 190 bis 230 °C, bestimmt gemäß ISO 11357-3:2014.

Zur Bestimmung der Schmelztemperatur (T_{M(A)}) gemäß ISO 11357-3:2014 wird die Komponente (A) üblicherweise als Granulat eingesetzt. Das Granulat der Komponente (A) weist dann üblicherweise eine Größe im Bereich von 1 mm bis 10 mm auf.

Die Schmelze-Volumenfließrate (MVR; melt volume-flow rate) (275 °C/5 kg) der Komponente (C) liegt beispielsweise im Bereich von 100 bis 500 cm³/10 min, bestimmt gemäß ISO 1133.

### Komponente (B)

Erfindungsgemäß ist die Komponente (B) mindestens ein erstes Copolymer. Die Komponente (B) ist erhältlich durch Polymerisation mindestens der Komponenten
(B1) mindestens ein erstes C₂-C₂₀-Alken und
(B2) mindestens ein zweites C₂-C₂₀-Alken
wobei die Komponenten (B1) und (B2) verschieden voneinander sind.

"Mindestens ein erstes C₂-C₂₀-Alken" bedeutet im Rahmen der vorliegenden Erfindung sowohl genau ein erstes C₂-C₂₀-Alken, als auch eine Mischung aus zwei oder mehreren ersten C₂-C₂₀-Alkenen.

"Mindestens ein zweites C₂-C₂₀-Alken" bedeutet im Rahmen der vorliegenden Erfindung sowohl genau ein zweites C₂-C₂₀-Alken, als auch eine Mischung aus zwei oder mehreren zweiten C₂-C₂₀-Alkenen.

Die Begriffe "Komponente (B1)" und "mindestens ein erstes C₂-C₂₀-Alken" werden im Rahmen der vorliegenden Erfindung synonym gebraucht und besitzen daher die gleiche Bedeutung.

Entsprechendes gilt für die Begriffe "Komponente (B2)" und "mindestens ein zweites C₂-C₂₀-Alken". Diese Begriffe werden im Rahmen der vorliegenden Erfindung ebenfalls synonym gebraucht und besitzen daher die gleiche Bedeutung.

Die Komponente (B1) ist bevorzugt mindestens ein erstes C₂-C₁₂-Alken und insbesondere bevorzugt mindestens ein erstes C₂-C₈-Alken.

Im Rahmen der vorliegenden Erfindung wird unter einem C₂-C₂₀-Alken ein unsubstituierter oder zumindest monosubstituierter Kohlenwasserstoff verstanden mit 2 bis 20 Kohlenstoffatomen und mindestens einer Kohlenstoff-Kohlenstoff-Doppelbindung (C-C-Doppelbindung). "Mindestens eine Kohlenstoff-Kohlenstoff-Doppelbindung" bedeutet im Rahmen der vorliegenden Erfindung sowohl genau eine Kohlenstoff-Kohlenstoff-Doppelbindung als auch zwei oder mehrere Kohlenstoff-Kohlenstoff-Doppelbindungen.

Anders ausgedrückt bedeutet C₂-C₂₀-Alkene, dass die Kohlenwasserstoffe mit 2 bis 20 Kohlenstoffatomen ungesättigt sind. Die Kohlenwasserstoffe können verzweigt oder unverzweigt sein. Beispiele für C₂-C₂₀-Alkene mit genau einer C-C-Doppelbindung sind Ethen, Propen, 1-Buten, 2-Buten, 2-Methylpropen (Isobutylen), 1-Penten, 2-Penten, 2-Methyl-1-Buten, 3-Methyl-1-Buten, 1-Hexen, 2-Hexen, 3-Hexen, Octen und 4-Methyl-1-Penten. Beispiele für C₂-C₂₀-Alkene mit 2 oder mehr C-C-Doppelbindungen sind Allen, 1,3-Butadien, 1,4-Pentadien, 1,3-Pentadien und 2-Methyl-1,3-Butadien (Isopren).

Beispielsweise ist die Komponente (B1) ausgewählt aus der Gruppe bestehend aus Ethen, Propen, 1-Buten, 2-Buten, 2-Methylpropen (Isobutylen), 1-Penten, 2-Penten, 2-Methyl-1-Buten, 3-Methyl-1-Buten, 1-Hexen, 2-Hexen, 3-Hexen, Octen, 1,3-Butadien und 4-Methyl-1-Penten. Bevorzugt ist die Komponente (B1) ausgewählt aus der Gruppe bestehend aus Ethen, Propen, 1-Buten, 2-Buten, 1,3-Butadien, Octen und 2-Methylpropen (Isobutylen) und am meisten bevorzugt ist die Komponente (B1) ausgewählt aus Ethen, Propen, Octen und 1,3-Butadien.

Gegenstand der vorliegenden Erfindung ist daher auch ein Laminat, bei dem die Komponente (B1) ausgewählt ist aus der Gruppe bestehend aus Ethen, Propen, 1-Buten, 2-Buten, Octen und Butadien.

Für die Komponente (B2) gelten die zuvor für die Komponente (B1) beschriebenen Ausführungen und Bevorzugungen entsprechend unter der Voraussetzung, dass die Komponente (B2) von der Komponente (B1) verschieden ist.

Gegenstand der vorliegenden Erfindung ist daher auch ein Laminat, bei dem die Komponente (B2) ausgewählt ist aus der Gruppe bestehend aus Ethen, Propen, 1-Buten, 2-Buten, Octen und Butadien.

Zur Polymerisation mindestens der Komponenten (B1) und (B2) werden beispielsweise im Bereich von 50 bis 99 mol-% der Komponente (B1) und bevorzugt im Bereich von 60 bis 85 mol-% der Komponente (B1) eingesetzt, jeweils bezogen auf die Gesamtmenge der Komponenten (B1) und (B2).

Beispielsweise werden bei der Polymerisation mindestens der Komponenten (B1) und (B2) im Bereich von 1 bis 50 mol-% der Komponente (B2) und bevorzugt im Bereich von 15 bis 40 mol-% der Komponente (B2) eingesetzt, jeweils bezogen auf die Gesamtmenge der Komponenten (B1) und (B2).

Bei der Polymerisation der Komponenten (B1) und (B2) kann darüber hinaus eine Komponente (B3) mindestens ein Katalysator, eingesetzt werden. Geeignete Katalysatoren sind dem Fachmann als solche bekannt.

Darüber hinaus kann eine Komponente (B4) mindestens ein weiteres Monomer, eingesetzt werden. Die Komponente (B4) dient vorzugsweise der Funktionalisierung bei der Polymerisation der Komponenten. Geeignete Komponenten (B4) sind beispielsweise Maleinsäureanhydrid.

Gegenstand der vorliegenden Erfindung ist daher auch ein Laminat, bei dem die Komponente (B) erhältlich ist durch Polymerisation einer zusätzlichen Komponente (B4), Maleinsäureanhydrid.

Beispielsweise werden im Bereich von 0,1 bis 5 Gew.-% der Komponente (B4) und bevorzugt im Bereich von 0,5 bis 1 Gew.-% der Komponente (B4) eingesetzt, jeweils bezogen auf die Summe der Gewichtsprozente der Komponenten (B1), (B2) und (B4) sowie gegebenenfalls der Komponente (B3).

Es versteht sich von selbst, dass sich die Molprozente und die Gewichtsprozente der Komponenten (B1), (B2) sowie gegebenenfalls der Komponenten (B3) und (B4) auf die Molprozente und die Gewichtsprozente der Komponenten vor der Polymerisation beziehen, also bevor die Komponenten miteinander reagiert haben. Es versteht sich von selbst, dass sich während der Polymerisation die Molprozente und die Gewichtsprozente gegebenenfalls ändern können.

Das mindestens eine erste Copolymer kann ein Blockcopolymer oder statistisches Copolymer sein. Bevorzugt ist das mindestens eine erste Copolymer ein Blockcopolymer.

In einem Blockcopolymer wechseln sich Blöcke, die erhältlich sind durch Polymerisation der Komponente (B1) mit Blöcken, die erhältlich sind durch Polymerisation der Komponente (B2), ab.

In einem statistischen Copolymer ist die Anordnung von Wiederholungseinheiten, die erhältlich sind durch Polymerisation der Komponente (B1) und solchen, die erhältlich sind durch Polymerisation der Komponente (B2) statistisch. Beispielsweise folgen auf einen Block, erhältlich durch Polymerisation der Komponente (B1) zwei Blöcke, erhältlich durch Polymerisation der Komponente (B2) und auf diese wiederum fünf Blöcke, erhältlich durch Polymerisation der Komponente (B1) und auf diese wiederum drei Blöcke, erhältlich durch Polymerisation der Komponente (B2).

Die Komponente (B) weist üblicherweise eine Glasübergangstemperatur (T_{G(B)}) auf. Beispielsweise liegt die Glasübergangstemperatur (T_{G(B)}) der Komponente (B) im Bereich von -100 bis 20 °C, bevorzugt im Bereich von -50 bis -20 °C, bestimmt gemäß ISO 11357-2:2014

Die Glasübergangstemperatur (T_{G(B)}) der Komponente (B) bezieht sich entsprechend der ISO11357-2:2014 im Rahmen der vorliegenden Erfindung auf die Glasübergangstemperatur (T_{G(B)}) der trockenen Komponente (B).

"Trocken" bedeutet im Rahmen der vorliegenden Erfindung, dass die Komponente (B) weniger als 1 Gew.-% Wasser, bevorzugt weniger als 0,5 Gew.-% und insbesondere weniger als 0,1 Gew.-% Wasser enthält, jeweils bezogen auf das Gesamtgewicht der Komponente (B). Mehr bevorzugt bedeutet "trocken", dass die Komponente (B) kein Wasser enthält und am meisten bevorzugt, dass die Komponente (B) kein Lösungsmittel enthält.

Die Schmelze-Massefließrate (MFR; melt flow rate) (230 °C/10 kg) der Komponente (B) liegt beispielsweise im Bereich von 0,1 bis 20 g/10 min, bevorzugt im Bereich von 1 bis 15 g/10 min, bestimmt gemäß ISO 1133.

### Komponente (C)

Erfindungsgemäß enthält die Polymerzusammensetzung (PZ) als Komponente (C) mindestens ein zweites Copolymer.

Die Komponente (C) ist erhältlich durch Polymerisation mindestens der Komponenten
(C1) mindestens ein drittes C₂-C₂₀-Alken und
(C2) mindestens ein Acrylsäurederivat.

"Mindestens ein drittes C₂-C₂₀-Alken" bedeutet im Rahmen der vorliegenden Erfindung sowohl genau ein drittes C₂-C₂₀-Alken,als auch eine Mischung aus zwei oder mehreren dritten C₂-C₂₀-Alkenen.

"Mindestens ein Acrylsäurederivat" bedeutet im Rahmen der vorliegenden Erfindung sowohl genau ein Acrylsäurederivat, als auch eine Mischung aus zwei oder mehreren Acrylsäurederivaten.

Im Rahmen der vorliegenden Erfindung werden die Begriffe "Komponente (C2)" und "mindestens ein drittes C₂-C₂₀-Alken" synonym gebraucht und besitzen daher die gleiche Bedeutung.

Entsprechendes gilt für die Begriffe "Komponente (C2)" und "mindestens ein Acrylsäurederivat". Diese Begriffe werden im Rahmen der vorliegenden Erfindung ebenfalls synonym gebraucht und besitzen die gleiche Bedeutung.

Für die Komponente (C1) gelten die zuvor beschriebenen Ausführungen und Bevorzugungen für die zuvor beschriebene Komponente (B1) entsprechend.

Gegenstand der vorliegenden Erfindung ist daher auch ein Laminat, bei dem die Komponente (C1) ausgewählt ist aus der Gruppe bestehend aus Ethen, Propen, 1-Buten, 2-Buten, Octen und Butadien.

Erfindungsgemäß ist die Komponente (C2) mindestens ein Acrylsäurederivat. Unter einem Acrylsäurederivat werden im Rahmen der vorliegenden Erfindung Acrylsäure, Methacrylsäure sowie davon abgeleitete Verbindungen verstanden, wie insbesondere Acrylsäureester und Acrylsäurehalogenide sowie Methacrylsäureester und Methacrylsäurehalogenide.

Gegenstand der vorliegenden Erfindung ist daher auch ein Laminat, bei dem die Komponente (C2) ausgewählt ist aus der Gruppe bestehend aus Acrylsäure, Acrylsäureestern, Acrylsäurehalogeniden, Methacrylsäure, Methacrylsäureestern und Methacrylsäurehalogeniden.

Gegenstand der vorliegenden Erfindung ist weiterhin ein Laminat, bei dem die Komponente (C2) ausgewählt ist aus der Gruppe bestehend aus Acrylsäure, Acrylsäureestern und Acrylsäurehalogeniden.

Acrylsäure wird auch als Propensäure bezeichnet und ist dem Fachmann als solche bekannt. Acrylsäureester bilden sich bei Umsetzung von Acrylsäure mit Alkoholen. Acrylsäureester werden auch als Alkylacrylate bezeichnet.

Beispielsweise ist die Komponente (C2) ausgewählt aus der Gruppe bestehend aus Acrylsäure, Methylacrylat, Ethylacrylat, n-Propylacrylat, n-Butylacrylat, Amylacrylat, 2-Methylbutylacrylat, 2-Ethylhexylacrylat, n-Hexylacrylat, n-Octylacrylat, n-Decylacrylat, n-Dodecylacrylat und 3,5,5-Trimethylhexylacrylat.

Methylacrylat wird auch als Acrylsäuremethylester bezeichnet, Ethylacrylat wird auch als Acrylsäureethylester bezeichnet und Butylacrylat wird auch als Acrylsäurebutylester bezeichnet.

Bevorzugt ist die Komponente (C2) ausgewählt aus der Gruppe bestehend aus Acrylsäuremethylester, Acrylsäurebutylester und Acrylsäure.

Gegenstand der vorliegenden Erfindung ist daher auch ein Laminat, bei dem die Komponente (C2) ausgewählt ist aus der Gruppe bestehend aus Acrylsäuremethylester, Acrylsäurebutylester und Acrylsäure.

Beispielsweise werden bei der Polymerisation mindestens der Komponenten (C1) und (C2) im Bereich von 50 bis 99 Gew.-% der Komponente (C1) eingesetzt und bevorzugt im Bereich von 60 bis 95 Gew.-%, jeweils bezogen auf die Summe der Gewichtsprozente der Komponenten (C1) und (C2).

Beispielsweise werden bei der Polymerisation der Komponenten (C1) und (C2) im Bereich von 1 bis 50 Gew.-% der Komponente (C2) und bevorzugt im Bereich von 5 bis 40 Gew.-% der Komponente (C2) eingesetzt, jeweils bezogen auf die Summe der Gewichtsprozente der Komponenten (C1) und (C2).

Bei der Polymerisation der Komponenten (C1) und (C2) kann darüber hinaus eine Komponente (C3) mindestens ein Katalysator, eingesetzt werden. Geeignete Katalysatoren sind dem Fachmann als solche bekannt.

Darüber hinaus kann eine Komponente (C4) mindestens ein weiteres Monomer, eingesetzt werden. Die Komponente (C4) dient vorzugsweise der Funktionalisierung bei der Polymerisation der Komponenten. Geeignete Komponenten (C4) sind beispielsweise Maleinsäureanhydrid.

Beispielsweise werden im Bereich von 0,01 bis 3 Gew.-% der Komponente (C4) und bevorzugt im Bereich von 0,1 bis 2 Gew.-% der Komponente (C4) eingesetzt, jeweils bezogen auf die Summe der Gewichtsprozente der Komponenten (C1), (C2) und (C4) sowie gegebenenfalls der Komponente (C3).

Es versteht sich von selbst, dass sich die Gewichtsprozente der Komponenten (C1), (C2) sowie gegebenenfalls der Komponenten (C3) und (C4) auf die Gewichtsprozente der Komponenten vor der Polymerisation beziehen, also bevor die Komponenten miteinander reagiert haben. Es versteht sich von selbst, dass sich während der Polymerisation die Gewichtsprozente gegebenenfalls ändern können.

Das mindestens eine zweite Copolymer kann ein Blockcopolymer oder statistisches Copolymer sein. Bevorzugt ist das mindestens eine zweite Copolymer ein Blockcopolymer.

In einem Blockcopolymer wechseln sich Blöcke, die erhältlich sind durch Polymerisation der Komponente (B1) mit Blöcken, die erhältlich sind durch Polymerisation der Komponente (B2), ab.

In einem statistischen Copolymer ist die Anordnung von Wiederholungseinheiten, die erhältlich sind durch Polymerisation der Komponente (C1) und solchen, die erhältlich sind durch Polymerisation der Komponente (C2) statistisch. Beispielsweise folgen auf einen Block, erhältlich durch Polymerisation der Komponente (C1) zwei Blöcke, erhältlich durch Polymerisation der Komponente (C2) und auf diese wiederum fünf Blöcke, erhältlich durch Polymerisation der Komponente (C1) und auf diese wiederum drei Blöcke, erhältlich durch Polymerisation der Komponente (C2).

Die Komponente (C) weist üblicherweise eine Schmelztemperatur (T_{M(C)}) auf. Die Schmelztemperatur (T_{M(C)}) der Komponente (C) liegt beispielsweise im Bereich von 50 bis 150 °C, bevorzugt im Bereich von 90 bis 110°C, bestimmt gemäß ISO 11357-3:2014.

Die Schmelze-Massefließrate (MFR; melt flow rate) (190 °C/2,16 kg) der Komponente (C) liegt beispielsweise im Bereich von 0,1 bis 20 g/10 min, bevorzugt im Bereich von 0,1 bis 5 g/10 min, bestimmt gemäß ISO 1133.

### Herstellung

Das erfindungsgemäße Laminat kann nach allen dem Fachmann bekannten Methoden hergestellt werden.

Bevorzugt erfolgt die Herstellung des Laminats in einem kontinuierlichen Verfahren.

Bevorzugt wird das erfindungsgemäße Laminat in einem Verfahren hergestellt, umfassend die folgenden Schritte:
a) Bereitstellen einer Folie aus einer Polymerzusammensetzung (PZ), die die Komponenten
   (A) mindestens ein Polyamid,
   (B) mindestens ein erstes Copolymer erhältlich durch Polymerisation mindestens der Komponenten
      (B1) mindestens ein erstes C₂-C₂₀-Alken und
      (B2) mindestens ein zweites C₂-C₂₀-Alken,
      wobei die Komponenten (B1) und (B2) verschieden voneinander sind,
   (C) mindestens ein zweites Copolymer erhältlich durch Polymerisation mindestens der Komponenten
      (C1) mindestens ein drittes C₂-C₂₀-Alken und
      (C2) mindestens ein Acrylsäurederivat
   enthält,
b) Erwärmen einer ersten Platte aus mindestens einem erste Metall,
c) Verpressen der erwärmten ersten Platte aus Schritt b) mit der in Schritt a) bereitgestellten Folie unter Erhalt des Laminats.

Gegenstand der vorliegenden Erfindung ist daher auch ein Verfahren zur Herstellung eines erfindungsgemäßen Laminats, umfassend die Schritte
a) Bereitstellen einer Folie aus einer Polymerzusammensetzung (PZ), die die Komponenten
   (A) mindestens ein Polyamid,
   (B) mindestens ein erstes Copolymer erhältlich durch Polymerisation mindestens der Komponenten
      (B1) mindestens ein erstes C₂-C₂₀-Alken und
      (B2) mindestens ein zweites C₂-C₂₀-Alken,
      wobei die Komponenten (B1) und (B2) verschieden voneinander sind,
   (C) mindestens ein zweites Copolymer erhältlich durch Polymerisation mindestens der Komponenten
      (C1) mindestens ein drittes C₂-C₂₀-Alken und
      (C2) mindestens ein Acrylsäurederivat
   enthält,
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

Für die Polymerzusammensetzung (PZ) im erfindungsgemäßen Verfahren gelten die zuvor beschriebenen Ausführungen und Bevorzugungen wie für die Polymerzusammensetzung (PZ) des erfindungsgemäßen Laminats entsprechend. Ebenso gelten für die Komponenten (A), (B) und (C) die zuvor beschriebenen Ausführungen und Bevorzugungen für die Komponenten (A), (B) und (C) des Laminats entsprechend.

In Schritt a) wird eine Folie aus der Polymerzusammensetzung (PZ) bereitgestellt. Die in Schritt a) bereitgestellte Folie besteht aus der Polymerzusammensetzung (PZ).

Verfahren zur Bereitstellung einer Folie aus einer Polymerzusammensetzung (PZ) sind dem Fachmann als solche bekannt. Bevorzugt wird die Folie in Schritt a) durch ein Extrusionsverfahren bereitgestellt.

Gegenstand der vorliegenden Erfindung ist daher auch ein Verfahren, bei dem die Folie in Schritt a) durch ein Extrusionsverfahren bereitgestellt wird.

Geeignete Extrusionsverfahren zur Bereitstellung der Folie aus der Polymerzusammensetzung (PZ) sind dem Fachmann bekannt und beispielsweise Castverfahren, Kalandrierverfahren, Blasverfahren oder Multiblasverfahren.

Die in Schritt a) bereitgestellte Folie aus der Polymerzusammensetzung (PZ) kann beliebige Dicken aufweisen. Üblicherweise weist die in Schritt a) bereitgestellte Folie aus der Polymerzusammensetzung (PZ) eine Dicke im Bereich von 1 bis 20 % größer auf als die mindestens eine weitere Schicht des herzustellenden Laminats, bevorzugt im Bereich von 2 bis 15 % größer auf als die mindestens eine weitere Schicht des herzustellenden Laminats und insbesondere bevorzugt im Bereich von 4 bis 10 % größer als die mindestens eine weitere Schicht des herzustellenden Laminats.

In Schritt b) wird eine erste Platte aus mindestens einem ersten Metall erwärmt. Die erste Platte besteht aus dem mindestens ersten Metall. Für das mindestens eine erste Metall gelten die zuvor beschriebenen Ausführungen und Bevorzugungen für das im Laminat enthaltene erste Metall entsprechend. Das Erwärmen der ersten Platte kann nach allen dem Fachmann bekannten Methoden erfolgen, bevorzugt wird die erste Platte in Schritt b) induktiv erwärmt.

Gegenstand der vorliegenden Erfindung ist daher auch ein Verfahren, bei dem das Erwärmen der ersten Platte in Schritt b) induktiv erfolgt.

Die erste Platte kann in Schritt b) auf eine beliebige Temperatur erwärmt werden. Bevorzugt wird die erste Platte in Schritt b) auf eine Temperatur erwärmt, die oberhalb der Schmelztemperatur (T_{M(PZ)}) und unterhalb der Zersetzungstemperatur der Polymerzusammensetzung (PZ) liegt.

Bevorzugt wird die erste Platte in Schritt b) auf eine Temperatur im Bereich von 150 bis 350 °C erwärmt, besonders bevorzugt im Bereich von 210 bis 280 °C und insbesondere bevorzugt im Bereich von 220 bis 250 °C.

Gegenstand der vorliegenden Erfindung ist daher auch ein Verfahren, bei dem die erste Platte in Schritt b) auf eine Temperatur im Bereich von 150 bis 350 °C erwärmt wird.

In Schritt c) wird die erwärmte erste Platte aus Schritt b) mit der in Schritt a) bereitgestellten Folie unter Erhalt des Laminats verpresst. Dabei verbindet sich die Folie mit der ersten Platte. Die Dicke der Folie kann dabei abnehmen.

Verfahren zum Verpressen der erwärmten ersten Platte aus Schritt b) mit der in Schritt a) bereitgestellten Folie in Schritt c) sind dem Fachmann als solche bekannt.

Die Schritte b) und c) können gleichzeitig oder nacheinander durchgeführt werden. Bevorzugt werden die Schritte b) und c) gleichzeitig durchgeführt. Dann wird die erste Platte erwärmt, während sie mit der in Schritt a) bereitgestellten Folie verpresst wird. Das in Schritt c) erhaltene Laminat wird üblicherweise abgekühlt. Das Abkühlen kann nach allen dem Fachmann bekannten Verfahren erfolgen, beispielsweise durch Einblasen von Druckluft auf das Laminat. Bevorzugt wird das Laminat abgekühlt während der Druck des Verpressens aufrechterhalten wird.

In dem erhaltenen Laminat ist die erwärmte erste Platte die mindestens eine erste Schicht aus mindestens einem ersten Metall und die Folie ist die mindestens eine weitere Schicht der Polymerzusammensetzung (PZ).

Für den Fall, dass das Laminat mindestens eine zweite Schicht enthalten soll, wird ein zusätzlicher Schritt b1) durchgeführt, bei dem eine zweite Platte aus mindestens einem zweiten Metall erwärmt wird. Für das Erwärmen der zweiten Platte in Schritt b1) gelten die zuvor beschriebenen Ausführungen und Bevorzugungen für das Erwärmen der ersten Platte in Schritt b) entsprechend.

In Schritt c) wird dann die erwärmte erste Platte mit der erwärmten zweiten Platte aus Schritt b1) verpresst, während sich die in Schritt a) bereitgestellte Folie zwischen den beiden Platten befindet.

Das Verfahren zur Herstellung des erfindungsgemäßen Laminats umfasst dann üblicherweise die folgenden Schritte:
a) Bereitstellen einer Folie aus einer Polymerzusammensetzung (PZ), die die Komponenten
   (A) mindestens ein Polyamid,
   (B) mindestens ein erstes Copolymer erhältlich durch Polymerisation mindestens der Komponenten
      (B1) mindestens ein erstes C₂-C₂₀-Alken und
      (B2) mindestens ein zweites C₂-C₂₀-Alken,
      wobei die Komponenten (B1) und (B2) verschieden voneinander sind,
   (C) mindestens ein zweites Copolymer erhältlich durch Polymerisation mindestens der Komponenten
      (C1) mindestens ein drittes C₂-C₂₀-Alken und
      (C2) mindestens ein Acrylsäurederivat
   enthält,
b) Erwärmen einer ersten Platte aus mindestens einem ersten Metall,
   b1) Erwärmen einer zweiten Platte aus mindestens einem zweiten Metall
c) Positionieren der in Schritt a) bereitgestellten Folie zwischen der in Schritt b) erwärmten ersten Platte und der in Schritt b1) erwärmten zweiten Platte und Verpressen der in Schritt b) erwärmten ersten Platte und der in Schritt b1) erwärmten zweiten Platte mit der in Schritt a) bereitgestellten Folie unter Erhalt des Laminats.

Gegenstand der vorliegenden Erfindung ist daher auch ein Verfahren zur Herstellung eines erfindungsgemäßen Laminats, das zusätzlich mindestens eine zweite Schicht mindestens eines zweiten Metalls umfasst und bei dem die mindestens eine erste Schicht mit der mindestens einen zweiten Schicht über die mindestens eine weitere Schicht verbunden ist, umfassend die Schritte
a) Bereitstellen einer Folie aus einer Polymerzusammensetzung (PZ), die die Komponenten
   (A) mindestens ein Polyamid,
   (B) mindestens ein erstes Copolymer erhältlich durch Polymerisation mindestens der Komponenten
      (B1) mindestens ein erstes C₂-C₂₀-Alken und
      (B2) mindestens ein zweites C₂-C₂₀-Alken,
      wobei die Komponenten (B1) und (B2) verschieden voneinander sind,
   (C) mindestens ein zweites Copolymer erhältlich durch Polymerisation mindestens der Komponenten
      (C1) mindestens ein drittes C₂-C₂₀-Alken und
      (C2) mindestens ein Acrylsäurederivat
   enthält,
b) Erwärmen einer ersten Platte aus mindestens einem ersten Metall,
   b1) Erwärmen einer zweiten Platte aus mindestens einem zweiten Metall
c) Positionieren der in Schritt a) bereitgestellten Folie zwischen der in Schritt b) erwärmten ersten Platte und der in Schritt b1) erwärmten zweiten Platte und Verpressen der in Schritt b) erwärmten ersten Platte und der in Schritt b1) erwärmten zweiten Platte mit der in Schritt a) bereitgestellten Folie unter Erhalt des Laminats.

Für das mindestens eine zweite Metall der zweiten Platte in dem erfindungsgemäßen Verfahren gelten die zuvor beschriebenen Ausführungen und Bevorzugungen für das gegebenenfalls im Laminat enthaltene mindestens eine zweite Metall der mindestens eine zweite Schicht entsprechend.

Für die zweite Platte sowie das Erwärmen der zweiten Platte gelten die zuvor beschriebenen Ausführungen und Bevorzugungen für die erste Platte und das Erwärmen der ersten Platte entsprechend.

Ebenso gelten für Schritt c), in dem zusätzlich die zweite Platte positioniert wird, die zuvor beschriebenen Ausführungen und Bevorzugungen für Schritt c) entsprechend.

Bevorzugt wird im Anschluss an Schritt c) ein Schritt d) durchgeführt:
d) umformen des erhaltenen Laminats bei einer Umformtemperatur (T_{U}) unter Erhalt eines umgeformten Laminats.

Schritt d) wird auch als Tiefziehen des Laminats bezeichnet. Dieses Verfahren ist dem Fachmann als solches bekannt. Dabei wird das Laminat in eine Form eingebracht und auf die Umformtemperatur (T_{U}) erwärmt, wobei es sich verformt.

Die Umformtemperatur (T_{U}) liegt bevorzugt oberhalb der Glasübergangstemperatur (T_{G(PZ)}) der Polymerzusammensetzung (PZ) und unterhalb der Schmelztemperatur (T_{M(PZ)}) der Polymerzusammensetzung (PZ). Beispielsweise liegt die Umformtemperatur (T_{U}) im Bereich von 55 bis 150 °C, bevorzugt im Bereich von 60 bis 90 °C und insbesondere bevorzugt im Bereich von 60 bis 80 °C.

Nachfolgend wird die vorliegende Erfindung anhand von Beispielen näher erläutert, ohne sie hierauf zu beschränken.

### Beispiele

Es wurden die folgenden Komponenten eingesetzt

### Polyamid

P1: Polyamid 6 (Ultramid B24N der BASF SE)

### Copolymere

Co1: Lucalen A2700 M (Basell); Ethylen/n-Butylacrylat Copolymer (MFR (190 °C / 2,16 kg nach ISO 1133) 7,2 g/10 min)
Co2: Lucalen A2540 D (Basell); Ethylen/n-Butylacrylat Copolymer (MFR (190 °C / 2,16 kg nach ISO 1133) 0,25 g/10 min)
Co3: Lucalen A2910 M (Basell); Ethylen/t-Butylacrylat/Acrylsäure Copolymer (MFR (190 °C / 2,16 kg nach ISO 1133) 7 g/10 min)
Co4: Exxelor 1801 (Exxon Chemicals); Ethylen/propylen/MSA Copolymer;
Co5: Lupolen 1800s (Basell); Ethylen/propylen/MSA Copolymer; LDPE (low density polyethylene)

### Additive

A1: Irganox (Antioxidans)
A2: Talkum

### Erstes und zweites Metall

Stahl

### Herstellung der Laminate

Die in Tabelle 1 angegebenen Polymere wurden in den in Tabelle 1 angegebenen Mengen mit einem ZE 25A UXTI-Doppelschneckenextruder compoundiert und extrudiert zu einer Folie von 430 µm Dicke und einer Breite von 53 cm. Die in Tabelle 1 angegebenen Mengen sind jeweils in Gew.-%.

Die Folien der Polymerzusammensetzung (PZ) sowie der ersten Platte und der zweiten Platte des Stahls, wurden vor der Herstellung für 7 Tage bei 80 °C gelagert. Zur Herstellung des Laminats wurden die erste Platte des Stahls und die zweite Platte des Stahls in eine Vorrichtung eingelegt und zwischen die erste Platte und die zweite Platte wurde eine Folie der Polymerzusammensetzung eingelegt. Die Platten wurden verpresst und induktiv innerhalb von 3 Sekunden auf eine Temperatur von 240 °C erwärmt und für 7 Sekunden bei dieser Temperatur gehalten. Anschließend wurde das Laminat für 20 Sekunden mit Druckluft abgekühlt und während des weiteren Abkühlens auf Raumtemperatur die Kraft des Verpressens abgelassen.

Die erhaltenen Laminate wurden in Streifen zu 40 mm Breite geschnitten und einem Peeltest nach ASTM D1876 unterzogen. Die Ergebnisse sind ebenfalls in Tabelle 1 zu sehen.

**Tabelle 1**

| | | Beispiel 1 | Beispiel 2 | Beispiel 3 | Vergleichsbeispiel 4 |
|---|---|---|---|---|---|
| P1 | [Gew.-%] | 59,1 | 59,1 | 59,1 | 59,1 |
| Co1 | [Gew.-%] | 25 | | | |
| Co2 | [Gew.-%] | | 25 | | |
| Co3 | [Gew.-%] | | | 25 | |
| Co4 | [Gew.-%] | 15 | 15 | 15 | 15 |
| Co5 | [Gew.-%] | | | | 25 |
| A1 | [Gew.-%] | 0,5 | 0,5 | 0,5 | 0,5 |
| A2 | [Gew.-%] | 0,4 | 0,4 | 0,4 | 0,4 |
| Peeltest | [N/40m] | 616 | 798 | 460 | 337 |

Die erfindungsgemäßen Laminat weisen besonders gute Peeleigenschaften auf.

## Patentansprüche

1. Laminat umfassend mindestens eine erste Schicht mindestens eines ersten Metalls und mindestens eine weitere Schicht einer Polymerzusammensetzung (PZ), **dadurch gekennzeichnet, dass** die Polymerzusammensetzung (PZ) die Komponenten
(A) mindestens ein Polyamid,
(B) mindestens ein erstes Copolymer erhältlich durch Polymerisation mindestens der Komponenten
(B1) mindestens ein erstes C₂-C₂₀-Alken und
(B2) mindestens ein zweites C₂-C₂₀-Alken,
wobei die Komponenten (B1) und (B2) verschieden voneinander sind,
(C) mindestens ein zweites Copolymer erhältlich durch Polymerisation mindestens der Komponenten
(C1) mindestens ein drittes C₂-C₂₀-Alken und
(C2) mindestens ein Acrylsäurederivat
enthält.

2. Laminat gemäß Anspruch 1, **dadurch gekennzeichnet, dass** das Laminat zusätzlich mindestens eine zweite Schicht mindestens eines zweiten Metalls umfasst und dass die mindestens eine erste Schicht mit der mindestens einen zweiten Schicht über die mindestens eine weitere Schicht verbunden ist.

3. Laminat gemäß Anspruch 1 oder 2, **dadurch gekennzeichnet, dass** die Komponente (A) ausgewählt ist aus der Gruppe bestehend aus PA 6, PA 6.6, PA 6.10, PA 6.12, PA 12, PA 6.36, PA 6/6.6, PA 6/6I6T, PA 6/6I, PA 6/6.36 und PA 6/6T.

4. Laminat gemäß einem der Ansprüche 1 bis 3, **dadurch gekennzeichnet, dass** die Komponente (B1) ausgewählt ist aus der Gruppe bestehend aus Ethen, Propen, 1-Buten, 2-Buten, Octen und Butadien.

5. Laminat gemäß einem der Ansprüche 1 bis 4, **dadurch gekennzeichnet, dass** die Komponente (B2) ausgewählt ist aus der Gruppe bestehend aus Ethen, Propen, 1-Buten, 2-Buten, Octen und Butadien.

6. Laminat gemäß einem der Ansprüche 1 bis 5, **dadurch gekennzeichnet, dass** die Komponente (C1) ausgewählt ist aus der Gruppe bestehend aus Ethen, Propen, 1-Buten, 2-Buten, Octen und Butadien.

7. Laminat gemäß einem der Ansprüche 1 bis 6, **dadurch gekennzeichnet, dass** die Komponente (C2) ausgewählt ist aus der Gruppe bestehend aus Acrylsäuremethylester, Acrylsäurebutylester und Acrylsäure.

8. Laminat gemäß einem der Ansprüche 1 bis 7, **dadurch gekennzeichnet, dass** die Komponente (B) erhältlich ist durch Polymerisation einer zusätzlichen Komponente (B4), Maleinsäureanhydrid.

9. Laminat gemäß einem der Ansprüche 1 bis 8, **dadurch gekennzeichnet, dass** die Polymerzusammensetzung (PZ) im Bereich von 40 bis 99 Gew.-% der Komponente (A) enthält, bezogen auf die Summe der Gewichtsprozente der Komponenten (A), (B) und (C).

10. Laminat gemäß einem der Ansprüche 1 bis 9, **dadurch gekennzeichnet, dass** das mindestens eine erste Metall ausgewählt ist aus der Gruppe bestehend aus Eisen, Aluminium, Kupfer, Nickel und Magnesium sowie Legierungen daraus.

11. Laminat gemäß einem der Ansprüche 1 bis 10, **dadurch gekennzeichnet, dass** die mindestens eine erste Schicht eine Dicke im Bereich von 0,1 mm bis 0,6 mm aufweist und/oder dass die mindestens eine weitere Schicht eine Dicke im Bereich von 0,02 bis 2 mm aufweist.

12. Verfahren zur Herstellung eines Laminats gemäß einem der Ansprüche 1 bis 11, umfassend die Schritte
a) Bereitstellen einer Folie aus einer Polymerzusammensetzung (PZ), die die Komponenten
(A) mindestens ein Polyamid,
(B) mindestens ein erstes Copolymer erhältlich durch Polymerisation mindestens der Komponenten
(B1) mindestens ein erstes C₂-C₂₀-Alken und
(B2) mindestens ein zweites C₂-C₂₀-Alken,
wobei die Komponenten (B1) und (B2) verschieden voneinander sind,
(C) mindestens ein zweites Copolymer erhältlich durch Polymerisation mindestens der Komponenten
(C1) mindestens ein drittes C₂-C₂₀-Alken und
(C2) mindestens ein Acrylsäurederivat
enthält,
b) Erwärmen einer ersten Platte aus mindestens einem ersten Metall,
c) Verpressen der erwärmten ersten Platte aus Schritt b) mit der in Schritt a) bereitgestellten Folie unter Erhalt des Laminats.

13. Verfahren gemäß Anspruch 12, **dadurch gekennzeichnet, dass** die erste Platte in Schritt b) auf eine Temperatur im Bereich von 150 bis 350 °C erwärmt wird.

14. Verfahren gemäß Anspruch 12 oder 13, **dadurch gekennzeichnet, dass** das Erwärmen der ersten Platte in Schritt b) induktiv erfolgt.

15. Verfahren gemäß einem der Ansprüche 12 bis 14, **dadurch gekennzeichnet, dass** die Folie in Schritt a) durch ein Extrusionsverfahren bereitgestellt wird.

## Claims

1. A laminate comprising at least one first layer of at least one first metal and at least one further layer of a polymer composition (PC), wherein the polymer composition (PC) comprises the following components:
(A) at least one polyamide,
(B) at least one first copolymer obtainable by polymerizing at least the following components:
(B1) at least one first C₂-C₂₀-alkene and
(B2) at least one second C₂-C₂₀-alkene,
where components (B1) and (B2) are different than one another,
(C) at least one second copolymer obtainable by polymerizing at least the following components:
(C1) at least one third C₂-C₂₀-alkene and
(C2) at least one acrylic acid derivative.

2. The laminate according to claim 1, wherein the laminate additionally comprises at least one second layer of at least one second metal and wherein the at least one first layer is joined to the at least one second layer via the at least one further layer.

3. The laminate according to claim 1 or 2, wherein component (A) is selected from the group consisting of PA 6, PA 6.6, PA 6.10, PA 6.12, PA 12, PA 6.36, PA 6/6.6, PA 6/6I6T, PA 6/61, PA 6/6.36 and PA 6/6T.

4. The laminate according to any of claims 1 to 3, wherein component (B1) is selected from the group consisting of ethene, propene, 1-butene, 2-butene, octene and butadiene.

5. The laminate according to any of claims 1 to 4, wherein component (B2) is selected from the group consisting of ethene, propene, 1-butene, 2-butene, octene and butadiene.

6. The laminate according to any of claims 1 to 5, wherein component (C1) is selected from the group consisting of ethene, propene, 1-butene, 2-butene, octene and butadiene.

7. The laminate according to any of claims 1 to 6, wherein component (C2) is selected from the group consisting of methyl acrylate, butyl acrylate and acrylic acid.

8. The laminate according to any of claims 1 to 7, wherein component (B) is obtainable by polymerizing an additional component (B4), maleic anhydride.

9. The laminate according to any of claims 1 to 8, wherein the polymer composition (PC) comprises in the range from 40% to 99% by weight of component (A), based on the sum total of the percentages by weight of components (A), (B) and (C).

10. The laminate according to any of claims 1 to 9, wherein the at least one first metal is selected from the group consisting of iron, aluminum, copper, nickel and magnesium and also alloys thereof.

11. The laminate according to any of claims 1 to 10, wherein the at least one first layer has a thickness in the range from 0.1 mm to 0.6 mm and/or wherein the at least one further layer has a thickness in the range from 0.02 to 2 mm.

12. A process for producing a laminate according to any of claims 1 to 11, comprising the steps of
a) providing a film of a polymer composition (PC) comprising the following components:
(A) at least one polyamide,
(B) at least one first copolymer obtainable by polymerizing at least the following components:
(B1) at least one first C₂-C₂₀-alkene and
(B2) at least one second C₂-C₂₀-alkene,
where components (B1) and (B2) are different than one another,
(C) at least one second copolymer obtainable by polymerizing at least the following components:
(C1) at least one third C₂-C₂₀-alkene and
(C2) at least one acrylic acid derivative,
b) heating a first sheet of at least one first metal,
c) pressing the heated first sheet from step b) with the film provided in step a) to obtain the laminate.

13. The process according to claim 12, wherein step b) comprises heating the first sheet to a temperature in the range from 150°C to 350°C.

14. The process according to claim 12 or 13, wherein the heating of the first sheet in step b) is effected by inductive means.

15. The process according to any of claims 12 to 14, wherein step a) comprises providing the film by an extrusion process.

## Revendications

1. Stratifié comprenant au moins une première couche d'au moins un premier métal et au moins une autre couche d'une composition polymère (PZ), **caractérisé en ce que** la composition polymère (PZ) contient les composants
(A) au moins un polyamide,
(B) au moins un premier copolymère pouvant être obtenu par polymérisation au moins des composants
(B1) au moins un premier C₂-C₂₀-alcène et
(B2) au moins un deuxième C₂-C₂₀-alcène,
les composants (B1) et (B2) étant identiques ou différents l'un de l'autre,
(C) au moins un deuxième copolymère pouvant être obtenu par polymérisation au moins des composants
(C1) au moins un troisième C₂-C₂₀-alcène et
(C2) au moins un dérivé d'acide acrylique.

2. Stratifié selon la revendication 1, **caractérisé en ce que** le stratifié comprend en plus au moins une deuxième couche d'au moins un deuxième métal et **en ce que** ladite au moins une première couche est reliée à ladite au moins une deuxième couche par l'intermédiaire de ladite au moins une autre couche.

3. Stratifié selon la revendication 1 ou 2, **caractérisé en ce que** le composant (A) est choisi dans le groupe constitué par PA6, PA6.6, PA6.10, PA6.12, PA12, PA6.36, PA6/6.6, PA6/6I6T, PA6/6I, PA6/6.36 et PA6/6T.

4. Stratifié selon l'une quelconque des revendications 1 à 3, **caractérisé en ce que** le composant (B1) est choisi dans le groupe constitué par l'éthène, le propène, le 1-butène, le 2-butène, l'octène et le butadiène.

5. Stratifié selon l'une quelconque des revendications 1 à 4, **caractérisé en ce que** le composant (B2) est choisi dans le groupe constitué par l'éthène, le propène, le 1-butène, le 2-butène, l'octène et le butadiène.

6. Stratifié selon l'une quelconque des revendications 1 à 5, **caractérisé en ce que** le composant (C1) est choisi dans le groupe constitué par l'éthène, le propène, le 1-butène, le 2-butène, l'octène et le butadiène.

7. Stratifié selon l'une quelconque des revendications 1 à 6, **caractérisé en ce que** le composant (C2) est choisi dans le groupe constitué par l'ester méthylique de l'acide acrylique, l'ester butylique de l'acide acrylique et l'acide acrylique.

8. Stratifié selon l'une quelconque des revendications 1 à 7, **caractérisé en ce que** le composant (B) peut être obtenu par polymérisation d'un composant supplémentaire (B4), l'anhydride de l'acide maléique.

9. Stratifié selon l'une quelconque des revendications 1 à 8, **caractérisé en ce que** la composition polymère (PZ) contient dans la plage 40 à 99% en poids du composant (A), par rapport à la somme des pourcentages en poids des composants (A), (B) et (C).

10. Stratifié selon l'une quelconque des revendications 1 à 9, **caractérisé en ce que** ledit au moins un premier métal est choisi dans le groupe constitué par le fer, l'aluminium, le cuivre, le nickel et le magnésium ainsi que leurs alliages.

11. Stratifié selon l'une quelconque des revendications 1 à 10, **caractérisé en ce que** ladite au moins une première couche présente une épaisseur dans la plage de 0,1 mm à 0,6 mm et/ou **en ce que** ladite au moins une autre couche présente une épaisseur dans la plage de 0,02 à 2 mm.

12. Procédé pour la préparation d'un stratifié selon l'une quelconque des revendications 1 à 11, comprenant les étapes :
a) préparation d'une feuille à partir d'une composition polymère (PZ) qui contient les composants
(A) au moins un polyamide,
(B) au moins un premier copolymère pouvant être obtenu par polymérisation au moins des composants
(B1) au moins un premier C₂-C₂₀-alcène et
(B2) au moins un deuxième C₂-C₂₀-alcène,
les composants (B1) et (B2) étant identiques ou différents l'un de l'autre,
(C) au moins un deuxième copolymère pouvant être obtenu par polymérisation au moins des composants
(C1) au moins un troisième C₂-C₂₀-alcène et
(C2) au moins un dérivé d'acide acrylique,
b) chauffage d'une première plaque constituée par au moins un premier métal,
c) pressage de la première plaque chauffée de l'étape b) avec la feuille préparée dans l'étape a) avec obtention du stratifié.

13. Procédé selon la revendication 12, **caractérisé en ce que** la première plaque est chauffée dans l'étape b) à une température dans la plage de 150 à 350°C.

14. Procédé selon la revendication 12 ou 13, **caractérisé en ce que** le chauffage de la première plaque dans l'étape b) est effectué par induction.

15. Procédé selon l'une quelconque des revendications 12 à 14, **caractérisé en ce que** la feuille est préparée dans l'étape a) par un procédé d'extrusion.
